# EUROPEAN PATENT APPLICATION

(11) **EP 3 048 797 A1**
(43) Date of publication of application: **27.07.2016**
(21) Application number: 15275026.1
(22) Date of filing: 22.01.2015
(51) Int. Cl.: H04N 21/2747, H04N 21/24, H04N 21/262, H04N 21/239, H04N 21/258, H04N 21/2668, H04N 21/6405

(54) **Delivery of digital content**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

A method (s300) and system are disclosed for controlling transfer via a communication network (24) of media content items from a network-attached server-side media recording device (26) to a network-attached client-side device (20). The system comprises an interface (266) for receiving requests in respect of identified media content items from the client-side device, and for receiving and storing a requested media content item in a server-side content item store (264), and a processor (262) operable to obtain predictions in dependence on one or more monitored characteristics of the network indicative of whether or not data transfer conditions in respect of a path or other portion (23) of the network to be used for transferring the item will satisfy predetermined data transfer criteria at a particular time, and configured to trigger a transfer process involving transferring the stored item to the client-side device (20) from which the request was received.

## Description

### Technical Field

The present invention relates to the delivery of digital media content, such as the delivery of digital television content to home-users. Aspects and embodiments of the invention relate to methods performed by or otherwise in respect of a network-attached server-side media recording device, the server-side media recording device being in communication via a communication network with at least one of a plurality of network-attached client-side devices, and to systems for controlling transfer of media content items from such a network-attached server-side media recording device.

### Background to the Invention and Prior Art

Generally, when a home-user wishes to record a digital media content item such as a television programme or film on a local networked storage device such as a local hard-drive or home Personal Video Recorder (PVR), they select the item via an interface such as an Electronic Programme Guide (EPG) on their local device, which requests the item from a server in the network. If the item is already available, it will immediately be downloaded to the user's device and stored there ready for them to play later. If the item is not yet available, it will be downloaded to the user's device as soon as it does become available.

Recently operators have been developing "Network PVR" (nPVR), in which the recording is stored by a device with memory in the network. Only when the user finally wants to play the content is it downloaded/streamed from the network-side memory of the nPVR to the user's device, this being done at the time the user attempts to view the content.

One reason nPVR-based techniques are of interest to content and/or service providers is that they allow the local (i.e. client-side) device (which may be a Set-Top Box (STB) provided by the user's content and/or service provider) to be cheaper as it no longer needs a large hard disc or other such memory. It could also allow the local device to be virtualised (i.e. most of its functions being moved into the network, leaving a simpler device in the home). From a customer's point of view, they may be able to play recordings on any device (tablets, etc.) and (at least in principle) 'record' any programme or other such item they like.

With current home PVRs, content tends to be downloaded at busy times in terms of network usage. Similarly, even with current nPVRs, content tends to be pushed from the nPVR to the client-side device at busy times, as it is generally at such times that large numbers of users want to watch television programmes or films, or decide that they want to record them. (If users want to watch items before they have been pushed to their home PVR, they may simply be pulled from the nPVR there-and-then, as per normal nPVR.)

A paper entitled "The Case for Geographical Push-Caching" by J.S. Gwertzman and M. Seltzer (Proc. 5th Workshop Hot Topics in Operating Systems (HotOS-V), Orcas Island, WA, May 4-5, 1995, pp 51-55) discusses how most wide-area caching schemes then were client-initiated, with decisions on when and where to cache information being made without the benefit of the server's global knowledge of the situation, and suggests that the server should play a role in making caching decisions, with geographical push-caching being proposed as a way of bringing the server back into the loop.

A later paper by the same authors entitled "An Analysis of Geographical Push-Caching" available online at http://citeseerx.ist.psu.edu/viewdoc/summary?doi=10.1.1.53.7770 discusses the use of a simulation to evaluate competing caching strategies, the results of which are said to show that geographical push-caching reduces bandwidth consumption and sever load by the same amount as web proxy caching, but with a savings in global cache space of almost two orders of magnitude.

United States application US2004/0117839 describes a system for delivery and presentation of media content. A client asset manager initiates a request to the remote site to transfer media assets to a local cache via a data path. The client process can send these requests for data transfer (downloads) to the remote site based on whether a set of predetermined constraints are satisfied. For example, downloads could occur when the user device is idle, when the network bandwidth is below a certain level, when the CPU and/or memory usage in the user device are below certain performance levels. The user can also specify that downloads only happen when the device is on certain networks, for example on a LAN versus a dialup connection. The media assets may be throttled or pushed by the remote site depending on the network conditions, e.g., traffic, available bandwidth, time of day, etc., without an initiating request from the client process.

United States application US2009/0310944 discloses a method and apparatus for maximizing "Last Mile" bandwidth through non-real-time PVR transmission. Clients send requests to record programs to an intermediate recording server (IRS). This includes memory for recording programming, and is able to stream content to the STBs at variable bit rates. The requests include programme identification, as well as an identification of a time period over which the recording should take place. The programming is then transmitted at the scheduled time by a head-end encoder to the IRS. The IRS stores the program in memory. The program is then streamed to the requesting STB for storage at a less-than real-time rate before the specified time. Thus, the programming from the head end encoder to the IRS may be streamed in real time but the transmission to the STBs will be done at less than real time. The IRS selects the bit rate such that the transfer of the recording to the STB is finished at the requested time.

United States application US2014/082124 discloses a collaborative system for viewing streamed content in a time-shifted manner. Lower priority content stored at a cloud Digital Video Recorder (DVR) is multicast to a plurality of local DVRs/STBs, for storage there, in a multicast manner at times when greater volumes of low speed bandwidth are available, such as at night or off-peak hours. For this, predictions are made as to what content users might want, enabling such content to be multicast at off-peak times.

Such a technique offsets at least some of the benefit of transferring content at off-peak times by transferring content on the basis of predictions as to what content users might want to watch, which itself not only increases the burden on the network, but increases capacity requirements in respect of the local DVRs or STBs (as these must then store significant amounts of content whether or not the user actually wants that content). Both of these are constrained resources, increased usage or requirements of which can decrease efficiency and/or performance levels and increase cost.

### Summary of the Invention

According to a first aspect of the invention, there is provided a method performed in respect of a network-attached server-side media recording device, the server-side media recording device being in communication via a communication network with at least one of a plurality of network-attached client-side devices, the method comprising:
receiving a request from at least one of the plurality of network-attached client-side devices in respect of an identified media content item;
receiving the identified media content item and storing the received media content item in a server-side content item store accessible to the server-side media recording device;
obtaining a prediction in dependence on one or more monitored characteristics of the network indicative of whether or not data transfer conditions in respect of a portion of the network to be used for transferring the stored media content item to the client-side device from which the request was received will satisfy predetermined data transfer criteria at a particular time; and
in response to a prediction that data transfer conditions in said portion of the network will satisfy said predetermined data transfer criteria at said particular time, triggering a transfer process for transferring the stored media content item to the client-side device from which the request was received at said particular time.

According to preferred embodiments, some or all of the method may be performed by the server-side media recording device itself. It will be noted however that at least some of the method may be performed by one or more separate devices acting in respect of the server-side media recording device. In particular, the steps of obtaining a prediction and/or of triggering a transfer process may be performed by one or more separate devices, for example, with the prediction itself being obtained in dependence on network characteristics monitored by one or more separate network monitoring systems, for example.

According to preferred embodiments, the one or more monitored characteristics of the network may comprise one or more characteristics selected from the following:
- characteristics associated with communication speed;
- characteristics associated with communication delay and/or delay variation;
- characteristics associated with reliability;
- characteristics associated with data loss;
- characteristics associated with communications quality.

According to preferred embodiments, the data transfer criteria may comprise one or more criteria selected from the following:
- criteria associated with communication speed;
- criteria associated with communication delay and/or delay variation;
- criteria associated with reliability;
- criteria associated with data loss;
- criteria associated with communications quality.

The prediction may obtained in dependence on one or more current measurements of said one or more characteristics of the network indicative of whether or not data transfer conditions currently satisfy predetermined data transfer criteria and/or are likely to satisfy predetermined data transfer criteria at one or more particular times subsequent to the measurements being made. The prediction may be obtained in dependence alternatively or additionally on previously-made measurements of said one or more characteristics of the network indicative of whether or not data transfer conditions are currently likely to satisfy predetermined data transfer criteria and/or are likely to satisfy predetermined data transfer criteria at one or more particular times subsequent to the measurements being made. Thus, according to preferred embodiments, current measurements may be used to trigger immediate transfers, while current and/or previously-made (or "historic") measurements may be used to schedule subsequent triggering of transfers. A balance between current, more recent and less recent measurements may be obtained by various means, such as use of an exponentially-weighted moving average, or another time-dependent weighted measure. Alternatively or additionally, measurements made over a period of time may be used to predict network conditions for different paths/portions of the network at different times (times of the day and/or days of the week, for example).

According to preferred embodiments, the portion of the network in respect of which the prediction is obtained may comprise one or more network paths from the server-side media recording device or from the server-side content item store to the client-side device from which the request was received.

According to preferred embodiments, respective requests for the identified media content item may be received from multiple different client-side devices and the transfer process may comprise generating a multicast transmission to the respective client-side devices from which requests were received to transfer the stored media content item to those client-side devices.

According to preferred embodiments, in response to receipt of requests in respect of the same media content item from a plurality of client-side devices, a transfer process may be triggered for transferring the stored media content item to a subset of the plurality of client-side devices from which the request was received for onward transmission to one or more others of the plurality of client-side devices from which the request was received, the member or members of the subset being determined in dependence on topological relationships between the plurality of client-side devices from which the request was received.

According to preferred embodiments, the server-side device and the client-side devices are both operable to receive and store media content items distributed according to a schedule.

According to preferred embodiments, the identified media content item is a media content item selected from a plurality of media content items scheduled for distribution via the server-side media recording device. The identified media content item may be selected from a plurality of media content items scheduled for broadcast or streaming, and/or may be selected from a plurality of media content items each scheduled for distribution at a particular time.

According to a second aspect of the invention, there is provided a system for controlling transfer of media content items from a network-attached server-side media recording device, the server-side media recording device being in communication via a communication network with at least one of a plurality of network-attached client-side devices, the system comprising:
at least one interface operable to receive requests in respect of identified media content items from at least one of the plurality of network-attached client-side devices, and configured to receive a requested media content item and store the received media content item in a server-side content item store accessible to the server-side media recording device; and
a processor operable to obtain a prediction in dependence on one or more monitored characteristics of the network indicative of whether or not data transfer conditions in respect of a portion of the network to be used for transferring the stored media content item to the client-side device from which the request was received will satisfy predetermined data transfer criteria at a particular time, and configured to trigger a transfer process in response to a prediction that data transfer conditions in said portion of the network will satisfy said predetermined data transfer criteria at said particular time, the transfer process involving transferring the stored media content item to the client-side device from which the request was received at said particular time.

According to a third aspect of the invention, there is provided a computer program element comprising computer program code to, when loaded into a computer system and executed thereon, cause the computer to perform the steps of the method set out above.

The various options and preferred embodiments referred to above in relation to the first aspect are also applicable in relation to the second and third aspects.

Where current systems generally either have a home or client-side PVR (which can obtain content to order) or a network or server-side PVR (which can deliver content to order), preferred embodiments of the invention are based on a realisation that there are intermediate positions if both a server-side "nPVR" and a client-side "hPVR" are used that can lead to advantages such as greater efficiency and/or performance levels and/or reduced cost. The two types of PVR can then work together to time-shift when the hPVR receives content from the nPVR (and possibly vice versa). In particular, after a user has requested content for later viewing, the nPVR sends the content to the hPVR at a time (and potentially in a manner) dependent both on what content the user has requested for later viewing ("record this programme") and on current network conditions (and maybe other considerations), which can be determined by or for the nPVR or its controlling entity, in order to determine a suitable time to transfer the content.

A primary advantage of preferred embodiments is that the nPVR can arrange to push content items specifically requested by the user to be stored on their hPVR for later viewing, in such a way that the transfer via the network of the items will occur at times when the network is (or is predicted to be) lightly loaded, e.g. at off-peak times, thereby saving bandwidth at peak times.

### Brief Description of the Drawings

A preferred embodiment of the present invention will now be described with reference to the appended drawings, in which:
**Figure 1** is a block diagram of a computer system suitable for the operation of embodiments of the present invention;
**Figure 2** shows various entities that may be involved in and/or interact with each other in the performance of a method according to a preferred embodiment; and
**Figure 3** is a flow-chart illustrating steps that may be performed by a network PVR (nPVR), by an entity including an nPVR, or by an entity acting on behalf of an nPVR, when performing a method in accordance with a preferred embodiment.

### Description of Preferred Embodiments of the Invention

With reference to the accompanying figures, methods and apparatus according to preferred embodiment will be described.

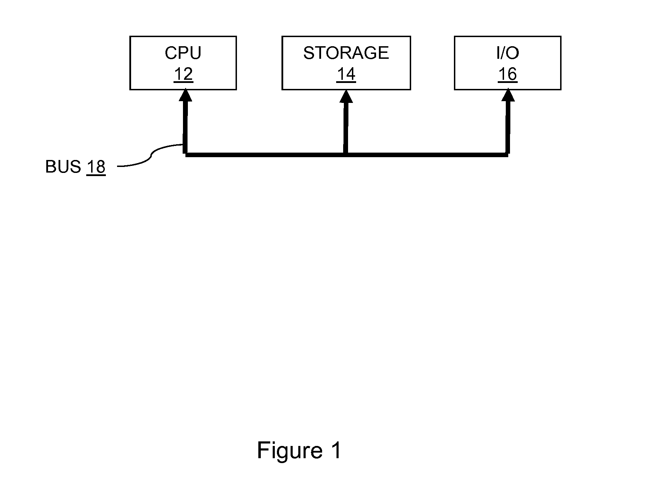

**Figure 1** is a block diagram of a computer system suitable for the operation of embodiments of the present invention. A central processor unit (CPU) 12 is communicatively connected to a data store 14 and an input/output (I/O) interface 16 via a data bus 18. The data store 14 can be any read/write storage device or combination of devices such as a random access memory (RAM) or a non-volatile storage device, and can be used for storing executable and/or non-executable data. Examples of non-volatile storage devices include disk or tape storage devices. The I/O interface 16 is an interface to devices for the input or output of data, or for both input and output of data. Examples of I/O devices connectable to I/O interface 16 include a keyboard, a mouse, a display (such as a monitor) and a network connection.

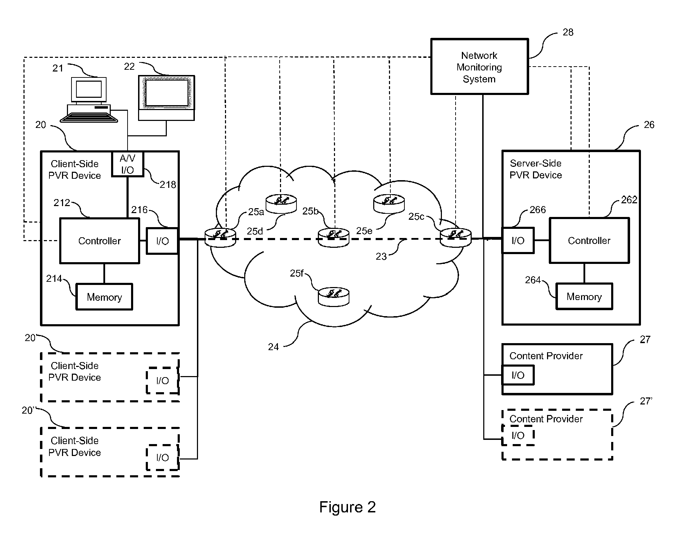

**Figure 2** shows various entities that may be involved in and/or interact with each other in the performance of a method according to a preferred embodiment.

In overview, a plurality of client-side PVR devices (or hPVRs) 20, 20' and 20" are in communication via a network 24 (comprising network nodes 25) with a server-side PVR device (or nPVR) 26. The server-side PVR device 26 is also in communication (possibly via the same network 24, via another network, or via another communication channel) with at least one content provider 27 (and possibly other content providers 27'), and with a network monitoring system 28, which itself is in communication with one or more of the network nodes 25a-f in order to be able to monitor characteristics of the network at or as experienced by those nodes, and may also be in communication with the client-side PVR devices 20 in general or components thereof (such as controller 212), with the server-side PVR device 26 in general or components thereof (such as controller 266), with the content providers 27, or with other elements of the network. These monitoring channels are indicated by dotted lines from the network monitoring system 28.

Each client-side PVR device may be located (when in use) in a home or other client premises.

There may be a separate server-side PVR device 26 in respect of each client-side PVR device 20, or a single server-side device may perform the functionality of the server-side PVR device 26 in respect of a plurality of client-side PVR devices 20 - this may be done using separate or shared hardware in the server-side device. Also, there may be a plurality of server-side PVR devices operating in respect of a single client-side PVR device - one operating in respect of films or television programmes while another operates in respect of advertising content, for example.

Referring to client-side PVR device 20 by way of example (while noting that the explanation of this may apply to each client-side PVR device), this includes a controller or processor 212, a memory (or client-side content item store) 214, an interface 216 via which the client-side device is connected to the network 24, and local interface 218. The client-side PVR device 20 is shown connected (wirelessly or otherwise) via local interface 218 (which may be a local network-type interface, or may in some scenarios simply be an audio-visual interface) to user devices such as a computer 21 and a television 22. It may also be connected to other user devices such as laptops, smart-phones, gaming devices, etc.

Referring to the server-side PVR device 26 (again noting that this may be by way of example in particular if there are multiple server-side PVR devices), this includes a controller or processor 262, a memory (or server-side content item store) 264 and an interface 266 via which the server-side device is connected to the network 24. The server-side device may be connected to the one or more content providers 27 and/or the network monitoring system 28 via the same interface 266, or may have one or more other interfaces.

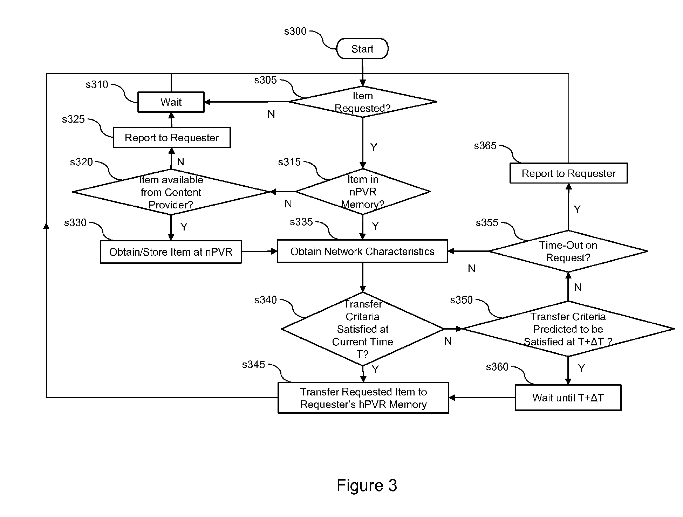

**Figure 3** is a flow-chart illustrating steps that may be performed by an nPVR, by an entity including an nPVR, or by an entity acting on behalf of an nPVR, when performing a method in accordance with a preferred embodiment. In this embodiment, the decision-making is generally described as being performed by the controller 262 of the server-side PVR device 26 in response to a prediction made in dependence on network characteristics monitored by a separate network monitoring system 28, but it will be noted that the decision-making may instead be performed by the network monitoring system 28 or by a separate entity in communication therewith. In another alternative, the network monitoring functionality may be performed by or within the server-side PVR device 26 (by the controller 262, for example).

Starting from step s300, the server-side (nPVR) device 26 establishes at step s305 whether any request for a specific media content item to be recorded has been received from any client-side (hPVR) device 20 with which it is associated. If not, it may wait (step s310) for a predetermined period then repeat step s305, or simply wait until such a request is received.

Once such a request has been received, the server-side device 26 establishes at step s315 whether the requested item is already present in the server-side content item store 264. If so, the process may proceed directly to step s335 (discussed below). If not, the process may proceed to step s320, with a check being made to determine whether the requested item is available from any content provider 27 with which the server-side device 26 is in communication, or can be in communication. If so, the requested item is obtained and stored in the server-side content item store 264 (step s330), and the process may proceed to step s335 (discussed below). If it is determined at step s320 that the requested item is not available, this can be reported to the requesting client (step s325), and the process may be attempted again (possibly after an appropriate delay - step s310) from step s305 or once a new item request is received.

If however the requested item is already present in the server-side content item store or has been found to be available and has been obtained and stored there, the server-side device 26 obtains information at step s335 relating to one or more characteristics of the network. These may be obtained directly by the server-side device 26, but in the present embodiment (and with reference to Figure 2), they may obtained by a dedicated network monitoring system 28 which is in communication with network nodes 25 (and possibly other entities in the network such as PVR devices 20, 26 and content providers 27, for example) and is thereby able to obtain information relating to current and possibly past network conditions. In particular, information may be obtained from network nodes (e.g. nodes 25a, 25b and 25c) on one or more paths 23 between the server-side PVR device 26 and the client-side PVR device 20 from which the item request was received. Such information would be of particular relevance if it relates specifically to network conditions for data travelling from the server-side PVR device 26 to the client-side PVR device 20, as this is the direction in which the requested item will subsequently be required to be transferred across the network. Information may also be obtained from other network nodes (e.g. nodes 25d and 25e), possibly in order to obtain more general network information, or information about possible other paths across the network. Information may also be obtained from sources other than network nodes (e.g. from client-side and server-side devices).

The network characteristics may be monitored (by the server-side device 26 itself, by a network monitoring system 28 or otherwise) on an ongoing basis or when updated information is required, and may include characteristics associated with communication speed, communication delay and/or delay variation, reliability, data loss, and/or communications quality, for example. They may be collated over a period of time and stored or analysed in order to provide basis for predictions as to what network conditions can be expected over different paths or in different portions of the network and/or at different times (times of the day and/or days of the week, for example) in the future.

Using network characteristics obtained at step s335, it can be determined (at step s340) whether or not data transfer conditions in respect of a path or paths likely to be used for transferring the requested item to the client-side device from which the request was received currently satisfy predetermined data transfer criteria. In correspondence with the monitored network characteristics, the data transfer criteria may include criteria associated with communication speed, communication delay and/or delay variation, reliability, data loss, and/or communications quality, for example, individually or in combination.

The determination can be made purely on the basis of information received (possibly via the network monitoring system 28) concerning conditions at or as recorded by the network nodes 25. It may however also be made in dependence on other information, such as metadata concerning the requesting user, other users, other requests submitted by the requesting user and/or other users, metadata concerning the topology of the network, and/or other factors.

If it is determined (at step s340) that the data transfer conditions in respect of a path or paths likely to be used for transfer of the requested item do currently satisfy the predetermined data transfer criteria, this can be taken as an indication that data transfer conditions in respect of that path or those paths will also satisfy the predetermined data transfer criteria in the immediate future, and a transfer of the requested item to the memory 214 of the relevant client-side device (i.e. the requester's hPVR) 20 can be triggered immediately. Once that has been done, the server-side processing in respect of that item and/or item request is complete and the process may then return to the start (s300), or to steps s305 or s310, for example. On receipt of the item, the client-side device 20 stores it in its memory 214, where it may remain (space-permitting) at least until the user has watched it and/or decided to delete it.

If however it is found (at step s340) that data transfer conditions in respect of the relevant path or paths do not currently satisfy the predetermined data transfer criteria, the process proceeds via step s350, in which a prediction is made as to whether data transfer conditions are likely to satisfy the predetermined data transfer criteria at a particular time in the future. Initially, there may not be sufficient information to make such a prediction reliably, but by obtaining network characteristics repeatedly or on an ongoing basis, it may be possible to make such predictions increasingly reliably. In the meantime, the process may continue, possibly via the loop containing steps s355 (discussed below), step s335, step s340 and step s350, or possibly via steps s355 and s365 (discussed below), until it is found (at step s340) that data transfer conditions in respect of the relevant path or paths do currently satisfy the predetermined data transfer criteria for an immediate transfer, or until sufficient information is available for a prediction to be made (at step s350).

If a period of time has passed since a request was made and no transfer has been triggered, it may be decided that the request should be timed-out (step s355), in which case this can be reported to the requesting client (step s365), and the process may be attempted again (possibly after an appropriate delay - step s310) from step s305 or once a new item request is received. Alternatively (not shown), the transfer criteria may be relaxed, or it may be arranged that a "best-efforts" is made at the transfer within a predetermined period, for example. Other options will be apparent for dealing with such scenarios.

If or when it is (eventually) predicted (at step s350) that data transfer conditions in respect of the relevant path or paths will satisfy the predetermined data transfer criteria at a particular time in the future, the process proceeds via step s360, waiting for that time, then when that time is reached, a transfer of the requested item to the memory 214 of the relevant client-side device (i.e. the requester's hPVR) 20 is triggered. Optionally, a check might be performed at or after step s360 (i.e. once time T+ΔT has been reached) as to whether the network conditions are as expected or are at least suitable for the transfer to be triggered. The decision-making algorithm may be run again, possibly with less strict transfer criteria (since delaying the transfer may make it more likely that the content will not have reached the requester's hPVR by the time the user wants to view it). Alternatively or additionally, a check may be made of the user's own network usage at that time - if the user is active, it may be appropriate to postpone the transfer until a later time, or until the user is known to have ceased usage of the network.

Possible Factors Affecting Decisions as to When to Transfer Requested Content Items

From the above, it will be appreciated that a primary decision with preferred embodiments concerns when to push requested content items from the nPVR to an hPVR. This decision is generally taken primarily on the basis of measured network conditions, i.e. to trigger the transfer to occur at time of low network utilisation. Measured and/or reported network conditions may be by virtue of probes located at users' premises (e.g. in STBs, home hubs or hPVRs). These may send occasional test packets to test servers in the network, and possibly at or topologically near the nPVR, in order to measure available rate or packet loss for example, reporting results directly to the nPVR or to some network monitoring or management system. The decision may take account of known or pre-defined "peak" and/or "off-peak" times as well as knowledge obtained from ongoing or "in-use" network monitoring.

The decision may take account of data indicating short-term user activity on their network connection (e.g. times of day and/or night when a user normally used and/or doesn't use the connection), data indicating medium term user activity on their network connection (e.g. lack of use of the connection for a period of a number of days may indicate that the user is away), external information which may be direct (e.g. specific dates when the user states that they will be away) or deduced (e.g. information concerning dates of flights may be obtained allowing a deduction to be made as to when the user is due to be away). This may be used to affect decision as to if or when to trigger transfers - if a user is known or expected to be away for a period of time, this may be used to lower the urgency for transfers and allow them to be delayed until network characteristics are particularly beneficial or suitable, or may be used to decide that certain content items need not or should not be transferred because their usefulness or rights-period will have expired before the user's return.

The decision may also take account of other factors, such as messages from a network management system (e.g. messages indicating that a network reconfiguration is about to be done may lead to transfers being delayed until a later time, for example), prior experience of what the available network capacity or usage activity is likely to be, prior experience of which items are likely to be watched or when (allowing decisions to be made as to which items should have their transfers prioritised.

If the client-side device is mobile and/or has different connectivity options, the decision may take account of connectivity issues, allowing transfers to be delayed until the device is connected via WiFi, for example.

Various hybrids of the above are possible.

### Possible Factors Affecting Decisions as to How to Transfer Requested Content Items

It will be appreciated that with certain embodiments, decisions concerning the transfer of requested content items may also involve deciding how to push requested content items from the nPVR to an hPVR. A default may be to transfer requested items using unicast as fast as possible, but the rate of transfer may be varied, e.g. using high transfer rates when network usage is relatively low.

Different versions of the same item (or different items, or sizes of item, for example) may have different transfer criteria. A standard-definition (SD) version of an item may be transferred as soon as certain (generally lower, or less-demanding) criteria are satisfied, with a high-definition (HD) version being transferred subsequently if certain (generally higher, or more-demanding) criteria are subsequently satisfied.

Also, transfers may be done using multicast where applicable. Where a number of requests have been received from different users for the same content item(s), a multicast tree may be built amongst those hPVRs requiring the same content which are topologically located such as to justify building such a multicast tree amongst them, with the content item(s) then being pushed over that tree to all those hPVRs at the same time.

Multicast techniques may be used in combination with a layered coding scheme, allowing users who want a standard-definition (SD) version to join a first multicast channel while those who want a high-definition (HD) version can join the first and a second channel, for example.

Multicast techniques may be also used where the content is divided between two channels, so an hPVR can get the content slowly by joining the channels successively or faster by joining them both at the same time.

Another option is for transfers to be done using broadcast. Where several users in the same broadcast zone have requested the same content item, broadcast technology may be appropriate. Radio and cable TV provide examples of broadcast media. However, there will be other client-side devices who can 'hear' the broadcast who did not request the content. They could simply not listen to the broadcast, or receive it and immediately delete it, or store the content but not be able to play it, for example due to the lack of a decryption key or other method for enforcing digital rights management.

The decision to use multicast or broadcast, as opposed to unicast, may be influenced by the number of client-side devices requesting the content, the nature of the content (for example how large it is) and topological and geographical information about the location of the client-side devices in the network.

### Other Issues and Considerations

It may be arranged that if an hPVR becomes full, some content may be transferred back to the nPVR (i.e. uploaded) in order to make room for the new content on the hPVR. Decisions as to when (and possibly how) such transfers are to be made may be taken in dependence on similar considerations to those affecting decisions regarding transfers from the nPVR to the hPVR. It may be possible to avoid actual upload of the content from the hPVR and simply delete it from the hPVR, if the content is already (or is still) on the nPVR, or if the nPVR can more easily obtain it from the content provider, for example.

Adverts may be spliced into cached content (e.g. live adverts could be added when users actually watch previously requested and transferred programmes). Similarly, personalised adverts could be pushed ahead then added into subsequently requested content.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method performed in respect of a network-attached server-side media recording device, the server-side media recording device being in communication via a communication network with at least one of a plurality of network-attached client-side devices, the method comprising:
receiving a request from at least one of the plurality of network-attached client-side devices in respect of an identified media content item;
receiving the identified media content item and storing the received media content item in a server-side content item store accessible to the server-side media recording device;
obtaining a prediction in dependence on one or more monitored characteristics of the network indicative of whether or not data transfer conditions in respect of a portion of the network to be used for transferring the stored media content item to the client-side device from which the request was received will satisfy predetermined data transfer criteria at a particular time; and
in response to a prediction that data transfer conditions in said portion of the network will satisfy said predetermined data transfer criteria at said particular time, triggering a transfer process for transferring the stored media content item to the client-side device from which the request was received at said particular time.

2. A method according to Claim 1 wherein the one or more monitored characteristics of the network comprise one or more characteristics selected from the following:
- characteristics associated with communication speed;
- characteristics associated with communication delay and/or delay variation;
- characteristics associated with reliability;
- characteristics associated with data loss;
- characteristics associated with communications quality.

3. A method according to Claim 1 or 2 wherein the data transfer criteria comprise one or more criteria selected from the following:
- criteria associated with communication speed;
- criteria associated with communication delay and/or delay variation;
- criteria associated with reliability;
- criteria associated with data loss;
- criteria associated with communications quality.

4. A method according to any of the preceding claims wherein the prediction is obtained in dependence on one or more current measurements of said one or more characteristics of the network indicative of whether or not data transfer conditions currently satisfy predetermined data transfer criteria and/or are likely to satisfy predetermined data transfer criteria at one or more particular times subsequent to the measurements being made.

5. A method according to any of the preceding claims wherein the prediction is obtained in dependence on previously-made measurements of said one or more characteristics of the network indicative of whether or not data transfer conditions are currently likely to satisfy predetermined data transfer criteria and/or are likely to satisfy predetermined data transfer criteria at one or more particular times subsequent to the measurements being made.

6. A method according to any of the preceding claims wherein the portion of the network in respect of which the prediction is obtained comprises one or more network paths from the server-side media recording device or from the server-side content item store to the client-side device from which the request was received.

7. A method according to any of the preceding claims wherein respective requests for the identified media content item are received from multiple different client-side devices and the transfer process comprises generating a multicast transmission to the respective client-side devices to transfer the stored media content item to the respective client-side devices from which requests were received.

8. A method according to any of the preceding claims wherein, in response to receipt of requests in respect of the same media content item from a plurality of client-side devices, a transfer process is triggered for transferring the stored media content item to a subset of the plurality of client-side devices from which the request was received for onward transmission to one or more others of the plurality of client-side devices from which the request was received, the member or members of the subset being determined in dependence on topological relationships between the plurality of client-side devices from which the request was received.

9. A method according to any of the preceding claims wherein the server-side device and the client-side devices are operable to receive and store media content items distributed according to a schedule.

10. A method according to any of the preceding claims wherein the identified media content item is a media content item selected from a plurality of media content items scheduled for distribution via the server-side media recording device.

11. A method according to Claim 10 wherein the identified media content item is a media content item selected from a plurality of media content items scheduled for broadcast or streaming.

12. A method according to Claim 10 or 11 wherein the identified media content item is a media content item selected from a plurality of media content items each scheduled for distribution at a particular time.

13. A system for controlling transfer of media content items from a network-attached server-side media recording device, the server-side media recording device being in communication via a communication network with at least one of a plurality of network-attached client-side devices, the system comprising:
at least one interface operable to receive requests in respect of identified media content items from at least one of the plurality of network-attached client-side devices, and configured to receive a requested media content item and store the received media content item in a server-side content item store accessible to the server-side media recording device; and
a processor operable to obtain a prediction in dependence on one or more monitored characteristics of the network indicative of whether or not data transfer conditions in respect of a portion of the network to be used for transferring the stored media content item to the client-side device from which the request was received will satisfy predetermined data transfer criteria at a particular time, and configured to trigger a transfer process in response to a prediction that data transfer conditions in said portion of the network will satisfy said predetermined data transfer criteria at said particular time, the transfer process involving transferring the stored media content item to the client-side device from which the request was received at said particular time.

14. A computer program element comprising computer program code to, when loaded into a computer system and executed thereon, cause the computer to perform the steps of a method as claimed in any of claims 1 to 12.
